# EUROPEAN PATENT APPLICATION

(11) **EP 4 644 094 A1**
(43) Date of publication of application: **05.11.2025**
(21) Application number: 25173639.3
(22) Date of filing: 30.04.2025
(51) Int. Cl.: B29C 65/06, B29C 65/56, B29C 65/00, B23K 20/12, B29L 31/00

(54) **FRICTION WELDING STRUCTURE**

(30) Priority: 30.04.2024 CN 202410541965
(71) Applicant: Wonderland Switzerland AG, 6312 Steinhausen (CH)
(72) Inventor: Hu, Junjie, Guangdong, 523648 (CN)
(74) Representative: ERNICKE Patent- und Rechtsanwälte PartmbB

(57) **Abstract**

The present disclosure discloses a friction welding structure, wherein the friction welding structure includes a first workpiece and a second workpiece. The first workpiece includes a workpiece body and a first welding structure, and the second workpiece includes a second workpiece body and a second welding structure. Both the first welding structure and the second welding structure are positioned between the first workpiece body and the second workpiece body. The first welding structure has a first lateral mating surface, and the second welding structure has a second lateral mating surface. The first lateral mating surface abuts against and is melt-connected to the second lateral mating surface through relative movement between the first workpiece and the second workpiece. In the friction welding structure of the present disclosure, since the first lateral mating surface and the second lateral mating surface for friction, are parallel to a first direction, a tangential stress is generated between the first lateral mating surface and the second lateral mating surface when the first workpiece and the second workpiece tend to separate from each other, enabling the first workpiece and the second workpiece to be more firmly bonded.

## Description

### TECHNICAL FIELD

The present disclosure relates to the field of friction welding technology, and particularly to a friction welding structure.

### BACKGROUND

Plastics, as materials frequently used in daily life, are often fabricated into various articles. In existing plastic welding processes, ultrasonic welding and vibration welding are commonly employed to join two plastic parts together. Ultrasonic welding is generally suitable for small components, while vibration welding is typically used for large plastic products.

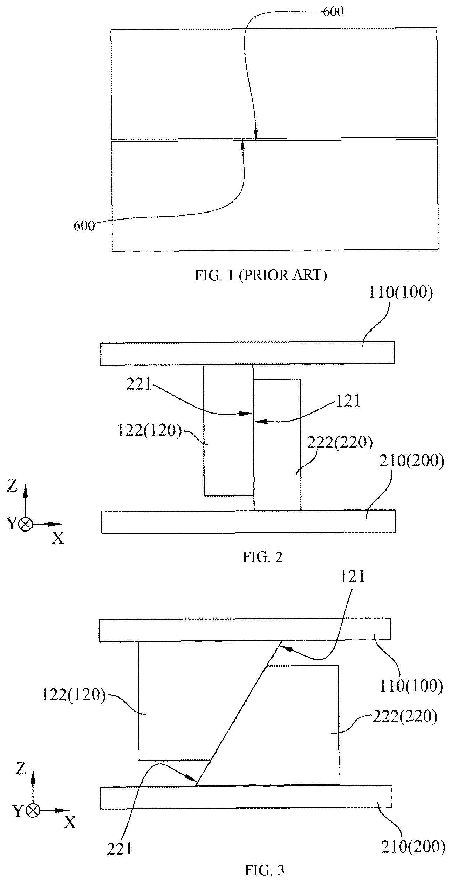

During ultrasonic welding, the plastic part is prone to warping. Therefore, for certain plastic parts, vibration welding achieves better effect than ultrasonic welding. Vibration welding typically involves arranging two workpieces (a first workpiece and a second workpiece) opposite each other (held by fixtures) and generating relative movement between the two workpieces to melt and join the opposing surfaces. As shown in Figure 1, the direction of the friction surface is usually perpendicular to the direction from the first workpiece towards the second workpiece. This welding method is referred to herein as forward welding. In forward welding, the end faces of the two workpieces arranged opposite each other are configured as welding surfaces, i.e., forward mating surfaces. When the workpieces have complex structures or when it is desired to form an accommodating space with a specific shape, it is difficult to provide continuous and large-area forward mating surfaces. As a result, the area on the forward mating surfaces available for welding is often limited, leading to a tendency of weld detachment of the welded structures formed at forward mating surfaces. For example, for plastic parts with complex structures, vibration welding is prone to result in insufficient welding strength.

Taking a tray used in daily life as an example, it includes an upper tray cover and a lower tray cover. To ensure aesthetic appearance, friction welding is used to join the internal components without the use of fasteners. However, due to the shape and structural limitations of the tray, conventional vibration welding cannot effectively join the upper tray cover and the lower tray cover, particularly in in regions with a smaller joint area between the tray and the seat. This joint is prone to weld failure during drop tests.

### SUMMARY

The main objective of the present disclosure is to provide a friction welding structure capable of improving the bonding strength of welded components.

To achieve the above objective, the present disclosure provides a friction structure, including a first workpiece and a second workpiece. The first workpiece includes a first workpiece body and a first welding structure. The second workpiece includes a second workpiece body and a second welding structure. The first welding structure and the second welding structure are both positioned between the first workpiece body and the second workpiece body.

A direction from the first workpiece body to the second workpiece body is defined as a first direction. The first welding structure has a first lateral mating surface extending perpendicularly to one side of the first direction. The second welding structure has a second lateral mating surface extending perpendicularly to one side of the first direction. The first lateral mating surface and the second lateral mating surface abut against each other and are melt-connected through relative movement between the first workpiece and the second workpiece.

In some embodiments, the first welding structure includes a first welding protrusion connected to the first workpiece body, and the second welding structure includes a second welding protrusion connected to the second workpiece body.

A direction from the first welding protrusion to the second welding protrusion is defined as a second direction, and the relative movement direction between the first workpiece and the second workpiece during welding is defined as a third direction. The first direction, the second direction, and the third direction intersect pairwise.

In this description, the term "every" is used to indicate a preferred arrangement, which is not limiting the scope of the disclosure. It shall be understood that the term "every" may always be read as in addition disclosing the terms "at least one", "at least two" or "at least a group of'. For simplified readability, the term "every" is used in explaining the invention. This however shall represent the various possible numberings. The term "every" may thus be replaced by "at least one, in particular every". The term "every two" may be replaced by "at least two, in particular every two". The same applies for the term "each". In some embodiments, the first welding structure includes a plurality of first welding protrusions arranged at intervals along the second direction, with a first accommodating groove formed between at least two, in particular every two adjacent first welding protrusions. The second welding structure includes a plurality of second welding protrusions arranged at intervals along the second direction, with a second accommodating groove formed between at least two, in particular every two adjacent second welding protrusions.

At least a second welding protrusion is inserted into the first accommodating groove, and at least a first welding protrusion is inserted into the second accommodating groove.

In some embodiments, an end of at least one, in particular each of the plurality of the first welding protrusions away from the first workpiece body abuts against a bottom wall of the second accommodating groove away from the first workpiece body; and/or,
an end of at least one, in particular each of the plurality of the second welding protrusions away from the second workpiece body abuts against a bottom wall of the first accommodating groove away from the second workpiece body.

In some embodiments, before welding, an interference fit is formed between at least one, in particular each of the plurality of the first welding protrusions and the second accommodating groove; and/or,
before welding, an interference fit is formed between at least one, in particular each of the plurality of the second welding protrusions and the first accommodating groove.

In some embodiments, before welding, a flow gap is provided between at least one, in particular each of the plurality of the first welding protrusions and a wall of the second accommodating groove; and/or,
before welding, a flow gap is provided between at least one, in particular each of the plurality of the second welding protrusions and a wall of the first accommodating groove.

In some embodiments, a first chamfer is provided at an end of at least one, in particular each of the plurality of the first welding protrusions away from the first workpiece body, and a flow gap is formed between a wall of the second accommodating groove and at least one, in particular each of the plurality of the first welding protrusions at the first chamfer; and/or,
the first lateral mating surface has a stepped configuration, and a flow gap is formed between the first lateral mating surface and the second lateral mating surface; and/or,
a second chamfer is provided at an end of at least one, in particular each of the plurality of the second welding protrusions away from the second workpiece body, and a flow gap is formed between a wall of the first accommodating groove and at least one, in particular each of the plurality of the second welding protrusions at the second chamfer; and/or,
the second lateral mating surface has a stepped configuration, and a flow gap is formed between the second lateral mating surface and the first lateral mating surface.

In some embodiments, the first workpiece body is provided with a recess, at least one, in particular each of the plurality of the first welding protrusions is disposed in the recess, and at least one, in particular each of the plurality of the second welding protrusions extends into the recess and in particular abuts against at least one, in particular each of the plurality of the first welding protrusions; and/or,
the second workpiece body is provided with a recess, at least one, in particular each of the plurality of the second welding protrusions is disposed in the recess, and at least one, in particular each of the plurality of the first welding protrusions extends into the recess and in particular abuts against at least one, in particular each of the plurality of the second welding protrusions.

In some embodiments, the first workpiece body is provided with a first welding rib, an end of the first welding rib away from the first workpiece body abuts against the second workpiece body, and the first welding rib is melt-connected to the second workpiece body through relative movement between the first workpiece and the second workpiece; or,
the second workpiece body is provided with a second welding rib, an end of the second welding rib away from the second workpiece body abuts against the first workpiece body, and the second welding rib is melt-connected to the first workpiece body through relative movement between the first workpiece and the second workpiece.

In some embodiments, the first workpiece body is provided with a plurality of first welding ribs arranged at intervals, ends of the first welding ribs away from the first workpiece body abut against the second workpiece body, the first welding ribs are melt-connected to the second workpiece body through relative movement between the first workpiece and the second workpiece, a first connecting rib is further provided between at least two, in particular every two adjacent first welding ribs, and the first connecting rib is connected to the first welding ribs on both sides; and/or,
the second workpiece body is provided with a plurality of second welding ribs arranged at intervals, ends of the second welding ribs away from the second workpiece body abut against the first workpiece body, the second welding ribs are melt-connected to the first workpiece body through relative movement between the first workpiece and the second workpiece, a second connecting rib is further provided between at least two, in particular every two adjacent second welding ribs, and the second connecting rib is connected to the second welding ribs on both sides.

Compared with the prior art, the beneficial effects of the present disclosure are as follows.

The present disclosure provides a friction welding structure, including a first workpiece and a second workpiece, which are the two components to be welded. The first workpiece includes a first welding structure, and the second workpiece includes a second welding structure. The first welding structure and the second welding structure are positioned between the first workpiece and the second workpiece. By welding the first welding structure and the second welding structure, the first workpiece and the second workpiece are joined together. Specifically, a direction from the first workpiece to the second workpiece is defined as a first direction. The first welding structure has a first lateral mating surface extending perpendicularly to one side of the first direction, and the second welding structure has a second lateral mating surface extending perpendicularly to one side of the first direction. The first lateral mating surface of the first welding structure abuts against the second lateral mating surface of the second welding structure. The first lateral mating surface and the second lateral mating surface generate frictional heat through mutual friction, which causes the first lateral mating surface and the second lateral mating surface to melt. After cooling, the first lateral mating surface and the second lateral mating surface are bonded together, thereby bonding the first welding structure and the second welding structure, and thus connecting the first workpiece and the second workpiece.

In the friction welding structure of the present disclosure, since the first lateral mating surface and the second lateral mating surface for friction, are extending parallel to the first direction from the first workpiece to the second workpiece, the area of the frictionally engaged surfaces is not limited. For workpieces with complex structures, the available welding surfaces for forward welding may be small. However, the friction welding structure of the present disclosure enables large-area lateral welding, significantly increasing welding strength.

### BRIEF DESCRIPTION OF THE DRAWINGS

To more clearly illustrate the technical solutions in the embodiments of the present disclosure or in the prior art, the accompanying drawings for describing the embodiments or the prior art will be briefly introduced below. Obviously, the accompanying drawings in the following description shows only some embodiments of the present disclosure. For those of ordinary skill in the art, other drawings can be obtained based on the structures shown in these accompanying drawings without creative effort.
FIG. 1 is a schematic diagram of a welding structure welding at forward mating surfaces in the related art.
FIG. 2 is a schematic diagram of a structure in which both a first lateral mating surface and a second lateral mating surface are extending parallel to the first direction according to an example of the present disclosure.
FIG. 3 is a schematic diagram of a structure in which both a first lateral mating surface and a second lateral mating surface are extending inclined relative to the first direction according to an example of the present disclosure.
FIG. 4 is a schematic diagram of a friction welding structure with a larger friction area according to an example of the present disclosure, in which both the first lateral mating surface and the second lateral mating surface are extending parallel to the first direction.
FIG. 5 is a schematic diagram of a friction welding structure with a larger friction area according to an example of the present disclosure, in which both the first lateral mating surface and the second lateral mating surface are extending inclined relative to the first direction.
FIG. 6 is a schematic diagram showing that a first accommodating groove is defined by a first welding structure according to an example of the present disclosure.
FIG. 7 is a schematic diagram showing that a second accommodating groove is defined by a second welding structure according to an example of the present disclosure.
FIG. 8 is a schematic diagram of a structure in which a top end of a second welding protrusion abuts against a bottom wall of the first accommodating groove according to another example of the present disclosure.
FIG. 9 is a schematic diagram of a friction welding structure with a flow gap according to another example of the present disclosure.
FIG. 10 is a schematic diagram of a structure in which a first welding protrusion is friction-welded to a recess provided in a second workpiece body according to an example of the present disclosure.
FIG. 11 is a schematic diagram of a structure in which a second welding protrusion is provided in a recess of a second workpiece body according to an example of the present disclosure.
FIG. 12 is a schematic diagram of a structure in which a first welding structure and a second welding structure are cylindrical according to an example of the present disclosure.
FIG. 13 is a cross-sectional schematic diagram of FIG. 12.
FIG. 14 is a schematic diagram of a structure in which a first welding structure and a second welding structure are conical according to an example of the present disclosure.
FIG. 15 is a schematic diagram of a structure in which a first welding protrusion has a first chamfer and a second welding protrusion has a second chamfer according to an example of the present disclosure.
FIG. 16 is a structural schematic diagram of a tray upper cover according to an example of the present disclosure.
FIG. 17 is a schematic diagram of another side of the tray upper cover of FIG. 16.
FIG. 18 is a schematic diagram of the tray upper cover of FIG. 16 from another perspective.
FIG. 19 is an enlarged view of portion A in FIG. 18.
FIG. 20 is a structural schematic diagram of a tray lower cover according to an example of the present disclosure.
FIG. 21 is a structural schematic diagram of another side of the tray lower cover of FIG. 20.
FIG. 22 is an enlarged view of portion B in FIG. 21.
FIG. 23 is an enlarged view of portion C in FIG. 21.
FIG. 24 is a structural schematic diagram of a tray according to an example of the present disclosure.
FIG. 25 is a structural schematic diagram of a children's dining table according to an example of the present disclosure.

The realization of the objectives, functional features, and advantages of the present disclosure will be further explained in conjunction with the examples and with reference to the accompanying drawings.

### DETAILED DESCRIPTION

The technical solutions in the examples of the present disclosure will be described clearly and completely below in conjunction with the accompanying drawings in the examples of the present disclosure. Obviously, the described examples are only a part of the examples of the present disclosure, rather than all of them. Based on the examples of the present disclosure, all other examples obtained by those of ordinary skill in the art without creative efforts shall fall within the protection scope of the present disclosure.

It should be noted that when directional indications (such as up, down, left, right, front, back, etc.) are involved in the examples of the present disclosure, these directional indications are intended to explain the relative positional relationships, movements, and other aspects between components in a specific posture. If the specific posture changes, the directional indications will also change accordingly.

In addition, when refenrence to descriptions such as "first" and "second" are involved in the examples of the present disclosure, these descriptions are for illustrative purposes only and should not be construed as indicating or implying relative importance or implicitly specifying the quantity of the indicated technical features. Thus, features defined by "first" and "second" may explicitly or implicitly include at least one such feature. Furthermore, when refenrence to "and/or" throughout the text, it means including three parallel options. Taking "A and/or B" as an example, it includes option A, option B, or the option where both A and B are satisfied. In addition, the technical solutions of the various examples may be combined with each other, but this is based on that the those of ordinary skill in the art can implement. When the combination of technical solutions results in contradictions or is impossible to achieve, such a combination of technical solutions is to be deemed non-existent and not within the protection scope claimed by the present disclosure.

Referring to FIG. 1, in the related art, the extension direction of the friction surfaces of two workpieces for friction welding is typically perpendicular to the direction from the first workpiece to the second workpiece. This welding method will hereinafter be referred to as forward welding. In forward welding, the end surfaces of the two workpieces arranged opposite each other are configured as welding surfaces, namely forward mating surfaces 600. When the workpieces have complex structures or when it is desired to form an accommodating space with a specific shape, it is difficult to provide continuous and large-area forward mating surfaces 600 on the workpieces. As a result, the area of the forward mating surfaces 600 available for welding is often limited, leading to a tendency for the welded structure formed at the forward mating surfaces 600 to experience weld detachment. For example, in the case of complex plastic components, vibration welding is prone to lead to insufficient welding strength.

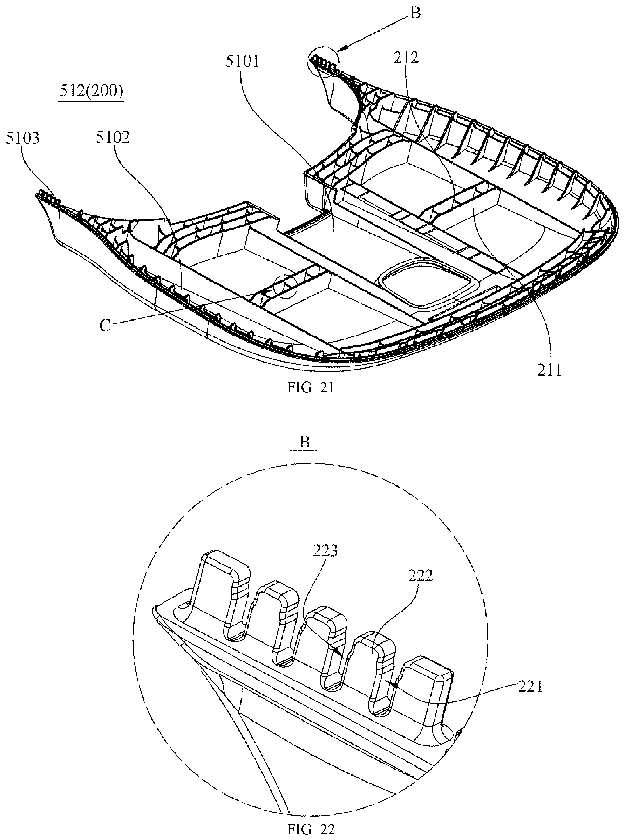

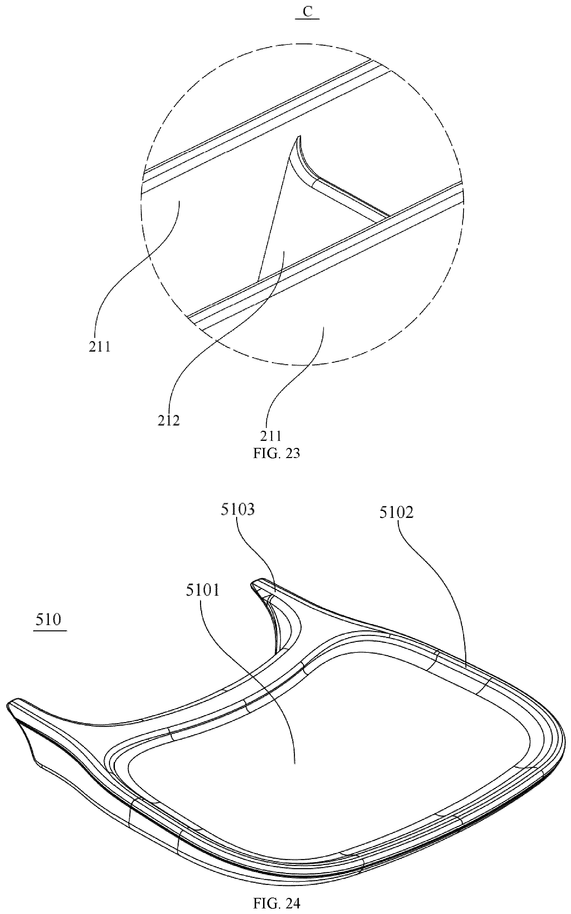

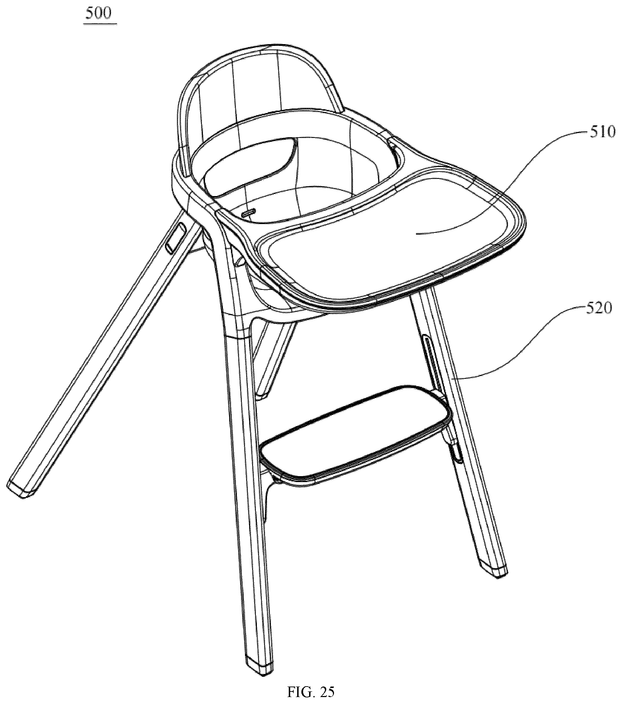

The friction welding structure according to the examples of the present disclosure will be described with reference to FIGS. 2 to 25. The friction welding structure of the present disclosure includes a first workpiece 100 and a second workpiece 200, both of which are for welding. The first workpiece 100 includes a first workpiece body 110 and a first welding structure 120, while the second workpiece 200 includes a second workpiece body 210 and a second welding structure 220. Before welding, the first workpiece 100 and the second workpiece 200 are arranged opposite each other such that the first welding structure 120 and the second welding structure 220 are positioned between the first workpiece body 110 and the second workpiece body 210. The first welding structure 120 and the second welding structure 220 are the components that become connected upon the welding of the first workpiece 100 with the second workpiece 200. By welding the first welding structure 120 and the second welding structure 220, the first workpiece 100 and the second workpiece 200 are joined together. The first workpiece 100 and the second workpiece 200 may be connected to each other solely through the connection of the first welding structure 120 and the second welding structure 220.

Referring to FIGS. 2 to 9, before welding, the first workpiece 100 is held by a first fixture, and the second workpiece 200 is held by a second fixture. Generally, the first workpiece 100 and the second workpiece 200 are arranged opposite each other in the height direction. The first workpiece 100 and the second workpiece 200 extend approximately along the X direction. The direction in which the first workpiece 100 and the second workpiece 200 are arranged opposite each other is defined as the first direction Z. The first welding structure 120 has a first lateral mating surface 121, and the second welding structure 220 has a second lateral mating surface 221. The extension direction of the first lateral mating surface 121 is parallel to the first direction Z or intersects the first direction Z (including being at an angle to the first direction Z, i.e., inclined relative to the first direction Z). The extension direction of the second lateral mating surface 221 is parallel to the first direction Z or inclined relative to the first direction Z. The first lateral mating surface 121 of the first welding structure 120 abuts against the second lateral mating surface 221 of the second welding structure 220. Since the extension directions of the first lateral mating surface 121 and the second lateral mating surface 221 are parallel to or inclined relative to the first direction Z from the first workpiece 100 to the second workpiece 200, the friction welding in this application may also be referred to as lateral friction welding. During lateral friction welding, the relative movement between the first workpiece 100 and the second workpiece 200 causes the first lateral mating surface 121 and the second lateral mating surface 221 to rub against each other, generating frictional heat. The frictional heat causes the first lateral mating surface 121 and the second lateral mating surface 221 to melt. After cooling, the first lateral mating surface 121 and the second lateral mating surface 221 are bonded together, thereby bonding the first welding structure 120 and the second welding structure 220, and thus connecting the first workpiece 100 and the second workpiece 200. Of course, in other examples, the first workpiece 100 and the second workpiece 200 may also be arranged opposite each other along, for example, a horizontal direction (e.g., the direction X or the direction Y).

Referring to FIGS. 2 to 15, in some examples, the first welding structure 120 includes a first welding protrusion 122 connected to the first workpiece body 110, and the second welding structure 220 includes a second welding protrusion 222 connected to the second workpiece body 210. The direction in which the first workpiece 100 and the second workpiece 200 are arranged opposite each other is defined as the first direction Z, the extension direction of the first workpiece 100 and the second workpiece 200 is defined as the second direction X, and the relative movement direction between the first workpiece 100 and the second workpiece 200 during welding is defined as the third direction Y. The second direction X is also defined as a direction perpendicular to both the first direction Z and the third direction Y. Specifically, the first direction Z, the second direction X, and the third direction Y are mutually perpendicular to each other. The first welding protrusion 122 has the first lateral mating surface 121, and the second welding protrusion 222 has the second lateral mating surface 221. The first workpiece 100 moves relative to the second workpiece 200 along the third direction Y, thereby causing the first lateral mating surface 121 and the second lateral mating surface 221 to be friction-welded together.

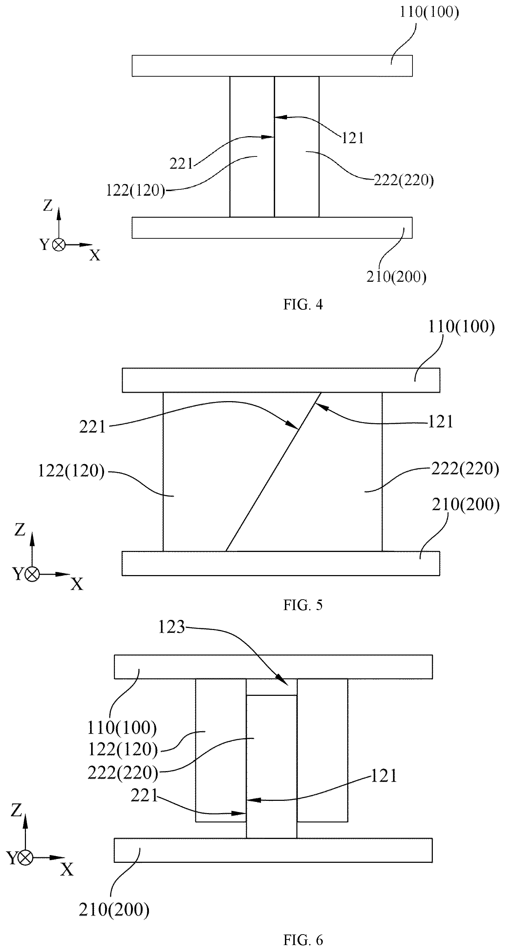

The friction welding structure of the present disclosure includes a first lateral mating surface 121 and a second lateral mating surface 221, which are extending either parallel to or inclined with respect to the first direction Z. In some examples, referring to Figures 2, 4, 6-8, and 15, the first lateral mating surface 121 and the second lateral mating surface 221 are extending parallel to the first direction Z. In some examples, referring to Figures 3 and 5, both the first lateral mating surface 121 and the second lateral mating surface 221 are extending inclined relative to the first direction Z. Preferably, the first lateral mating surface 121 and the second lateral mating surface 221 are extending inclined at a small angle relative to the first direction Z, more specifically, the inclination angle between the first lateral mating surface 121 or the second lateral mating surface 221 and the first direction Z is less than 45°. In the friction welding structure of the present disclosure, the area of the friction mating surfaces of the first workpiece 100 and the second workpiece 200 is equal to the mating area of the first lateral mating surface 121 and the second lateral mating surface 221, and is not limited by the area of the forward mating surfaces of the first workpiece 100 and the second workpiece 200. This allows the area of the friction mating surfaces of the first workpiece 100 and the second workpiece 200 to be significantly increased, thereby making the welding of the first workpiece 100 with the second workpiece 200 more robust. Therefore, the friction welding structure of the present disclosure can be applied to friction welding of workpieces with various complex configurations.

In some examples, referring to Figures 2, 4, 6-8, 10-11, and 15, the first welding structure 120 includes a first welding protrusion 122 connected to the first workpiece body 110 and extending in a direction substantially perpendicular to the first workpiece body 110. The second welding structure 220 includes a second welding protrusion 222 connected to the second workpiece body 210 and extending in a direction substantially perpendicular to the second workpiece body 210. The first welding protrusion 122 and the second welding protrusion 222 are substantially cuboid in structure. The first welding protrusion 122 has a first lateral mating surface 121 extending parallel to the first direction Z, and the second welding protrusion 222 has a second lateral mating surface 221 extending parallel to the first direction Z. Of course, the first welding protrusion 122 and the second welding protrusion 222 may not necessarily be cuboid in structure, as long as they have the first lateral mating surface 121 and the second lateral mating surface 221 extending parallel to or inclined with respect to the first direction Z. In some examples, referring to Figures 2, 4, and 8, the first lateral mating surface 121 and the second lateral mating surface 221 are extending inclined relative to the first direction Z. The inclined first lateral mating surface 121 and second lateral mating surface 221 can also increase the welding area, improve welding strength, and enhance stability.

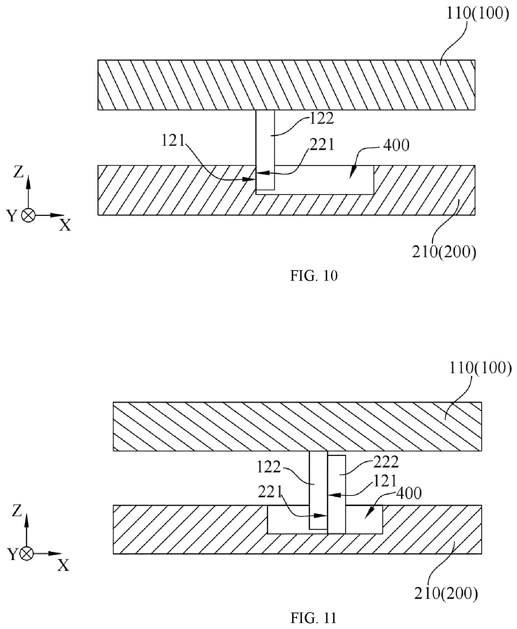

Referring to Figures 10 and 11, in some examples, the first welding structure 120 is a protrusion, and the second welding structure 220 is a recess 400. The protrusion and the recess are configured such that the protrusion of the first welding structure 120 is inserted into the recess 400 of the second welding structure 220. When the first workpiece 100 and the second workpiece 200 are friction welded, friction between the first lateral mating surface 121 of the protrusion and the second lateral mating surface 221 of the recess 400 causes the first welding structure 120 and the second welding structure 220 to melt and bond, thereby joining the first workpiece 100 and the second workpiece 200 together. Additionally, the recess 400 can accommodate molten material generated during the friction process between the first welding structure 120 and the second welding structure 220. The molten material can fill the gaps during the friction welding of the first welding structure 120 with the second welding structure 220, thereby providing a better welding effect and making the welding of the first workpiece 100 with the second workpiece 200 more secure.

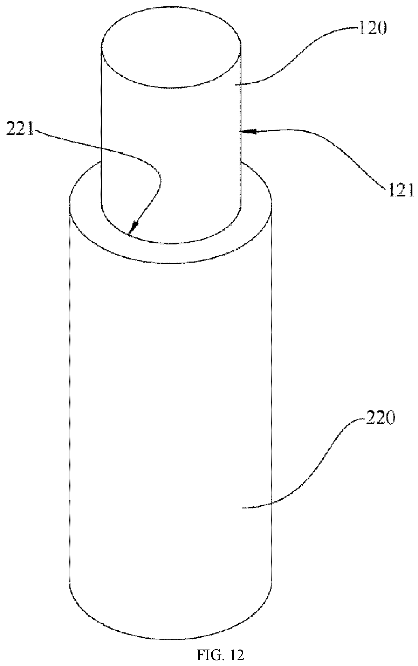

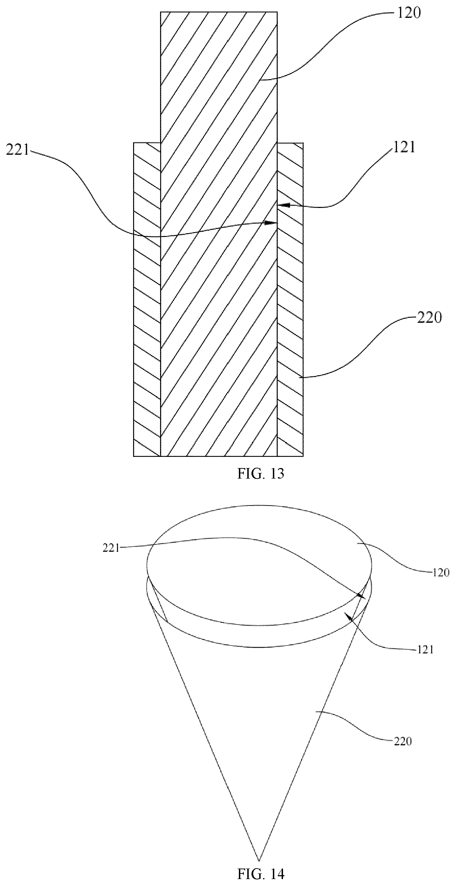

Referring to Figures 12 and 13, in some examples, the first welding structure 120 is cylindrical, and the second welding structure 220 is cylindrical. The first lateral mating surface 121 is the outer peripheral wall surface of the first welding structure 120, and the second lateral mating surface 221 is the inner peripheral wall surface of the second welding structure 220. A cylindrical component of the first welding structure 120 is inserted into a cylindrical component of the second welding structure 220, and the outer peripheral wall surface of the first welding structure 120 and the inner peripheral wall surface of the second welding structure 220 frictionally melt, thereby joining the first welding structure 120 and the second welding structure 220 together. Specifically, the first welding structure 120 is rubbed against the second welding structure 220 in a rotational manner. This example provides a shape and mating method for the first welding structure 120 and the second welding structure 220, which can be selected for the first workpiece 100 and the second workpiece 200 having different shapes.

Optionally, referring to Figure 14, in some examples, the first welding structure 120 is conical, and the second welding structure 220 is conical. The first lateral mating surface 121 and the second lateral mating surface 221 are both conical surfaces. The first welding structure 120 is inserted into the second welding structure 220. Rotation of the first welding structure 120 relative to the second welding structure 220 rubs the first lateral mating surface 121 and the second lateral mating surface 221, thereby frictionally welding the first workpiece 100 and the second workpiece 200 together.

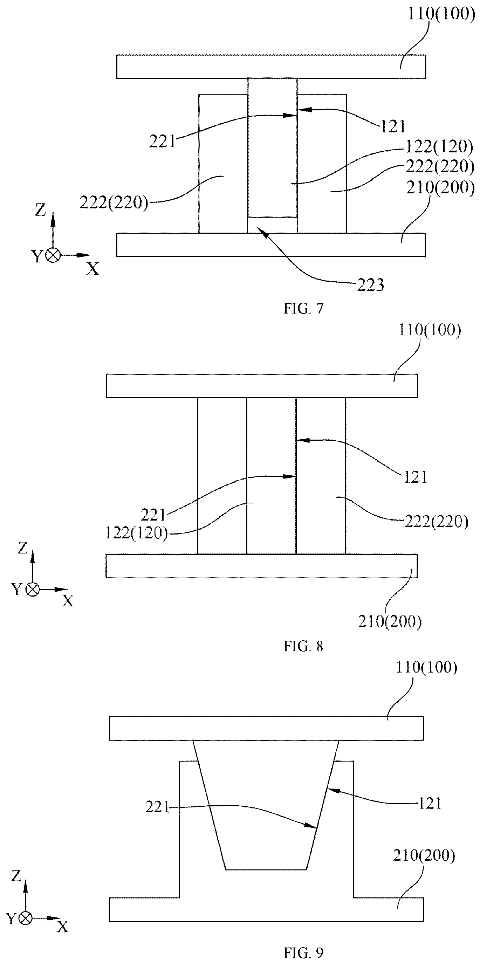

It is to be understood that, referring to Figures 6 and 7, in some examples, the first welding structure 120 includes a first welding protrusion 122 and a first accommodating groove 123 connected to the first workpiece body 110, and the second welding structure 220 includes a second welding protrusion 222 connected to the second workpiece body 210; and/or the first welding structure 120 includes a first welding protrusion 122 connected to the first workpiece body 110, and the second welding structure 220 includes a second welding protrusion 222 and a second accommodating groove 223 connected to the second workpiece body 210. Before welding, the first welding protrusion 122 moves toward the bottom wall of the second accommodating groove 223, and/or the second welding protrusion 222 moves toward the bottom wall of the first accommodating groove 123. In some examples, after the top end of the first welding protrusion 122 abuts against the bottom wall of the second accommodating groove 223, the first welding protrusion 122 and the second welding protrusion 222 undergo relative motion along a third direction to perform friction welding. At this time, the first lateral mating surface 121 and the second lateral mating surface 221 undergo relative motion along the third direction Y to perform friction, and the top end of the first welding protrusion 122 and the bottom wall of the second accommodating groove 223 undergo relative motion along the third direction Y to perform friction, thereby completing the friction welding of the first workpiece 100 with the second workpiece 200. In such a configuration, the bonding of the first workpiece 100 and the second workpiece 200 is achieved through friction welding of the first lateral mating surface 121 with the second lateral mating surface 221, increasing the area available for welding, and thereby enhancing the stability of the welding between the first workpiece 100 and the second workpiece 200. Optionally, before welding, a certain gap is maintained between the first welding protrusion 122 and the bottom wall of the second accommodating groove 223 along the first direction Z, and/or between the second welding protrusion 222 and the bottom wall of the first accommodating groove 123 along the first direction Z, thereby forming a filling space for molten material, which improves the welding stability between the first workpiece 100 and the second workpiece 200.

It is to be understood that, in some examples, the top end of the second welding protrusion 222 abuts against the bottom wall of the first accommodating groove 123. When the first workpiece 100 and the second workpiece 200 are welded, the first welding protrusion 122 and the second welding protrusion 222, as well as the top end of the second welding protrusion 222 and the bottom wall of the first accommodating groove 123, undergo relative motion along the third direction Y to perform friction welding.

It is to be understood that, in some examples, the top end of the first welding protrusion 122 abuts against the bottom wall of the second accommodating groove 223, and the top end of the second welding protrusion 222 abuts against the bottom wall of the first accommodating groove 123. When the first workpiece 100 and the second workpiece 200 are welded, the first welding protrusion 122 and the second welding protrusion 222, the top end of the first welding protrusion 122 and the bottom wall of the second accommodating groove 223, as well as the top end of the second welding protrusion 222 and the bottom wall of the first accommodating groove 123, undergo relative motion along the third direction Y to perform friction welding.

Referring to Figures 6-8 and 15, in some examples, the first welding structure 120 includes a plurality of first welding protrusions 122 arranged at intervals along the second direction X, with a first accommodating groove 123 formed between every two adjacent first welding protrusions 122; and/or the second welding structure 220 includes a plurality of second welding protrusions 222 arranged at intervals along the second direction X, with a second accommodating groove 223 formed between every two adjacent second welding protrusions 222. At least a second welding protrusion 222 is inserted into the first accommodating groove 123, specifically, a side surface of the second welding protrusion 222 abuts a side surface of the first accommodating groove 123 formed by the two adjacent first welding protrusions 122, and the second welding protrusion 222 and the two adjacent first welding protrusions 122 undergo relative motion along the third direction Y to complete friction welding; and/or at least a first welding protrusion 122 is inserted into the second accommodating groove 223, specifically, a side surface of the first welding protrusion 122 abuts a side surface of the second accommodating groove 223 formed by the two adjacent second welding protrusions 222, and the first welding protrusion 122 and the two adjacent second welding protrusions 222 undergo relative motion along the third direction Y to complete friction welding. With this arrangement, by providing multiple lateral friction mating surfaces, the area available in the friction welding structure for welding is increased, thereby enhancing the stability of the welding between the first workpiece 100 and the second workpiece 200.

It is to be understood that, referring to Figures 10 and 11, in some examples, the second welding structure 220 includes a recess 400, and the first welding structure 110 is provided with a first welding protrusion 122. The first welding protrusion 122 can extend into the recess 400, enabling the first lateral mating surface 121 of the first welding protrusion 122 and the second lateral mating surface 221 of the recess 400 to perform lateral friction welding. The recess 400, on one hand, provides a lateral friction mating surface and, on the other hand, serves as a pool for molten material.

It is to be understood that, referring to Figures 10 and 11, in some examples, the first welding structure 120 includes a first welding protrusion 122, and the second welding structure 220 includes a recess 400, within which a second welding protrusion 222 is provided. Specifically, the first welding protrusion 122 includes a first lateral mating surface 121, and the second welding protrusion 222 includes a second lateral mating surface 221. The lateral friction welding between the first welding protrusion 122 and the second welding protrusion 222 is achieved through the mating of these surfaces.

Referring to Figures 4, 5, and 15, in some examples, the end of the first welding protrusion 122 away from the first workpiece body 110 abuts against the bottom wall of the second accommodating groove 223 away from the first workpiece body 110. With this arrangement, when the first workpiece 100 and the second workpiece 200 are welded, not only do the first lateral mating surface 121 and the second lateral mating surface 221 undergo relative motion along the third direction Y to achieve bonding through friction, but the end of the first welding protrusion 122 and the bottom wall of the second accommodating groove 223 also undergo relative motion along the third direction Y to achieve bonding through friction. Thus, the area available for friction bonding between the first workpiece 100 and the second workpiece 200 is increased, and thus the first workpiece 100 and the second workpiece 200 are connected more securely.

Referring to Figures 4, 5, and 15, in some examples, the end of the second welding protrusion 222 away from the second workpiece body 210 abuts against the bottom wall of the first accommodating groove 123 away from the second workpiece body 210. With this arrangement, when the first workpiece 100 and the second workpiece 200 are welded, not only the first lateral mating surface 121 and the second lateral mating surface 221 undergo relative motion along the third direction Y to achieve bonding through friction, but also the end of the second welding protrusion 222 and the bottom wall of the first accommodating groove 123 undergo relative motion along the third direction Y to achieve bonding through friction. Consequently, the area available for friction bonding between the first workpiece 100 and the second workpiece 200 is increased, and thus the first workpiece 100 and the second workpiece 200 are connected more securely.

Referring to Figures 3, 4, and 14, in some examples, the middle portion of the top end of the first welding protrusion 122 along the second direction X abuts against the bottom wall of the second accommodating groove 223, while the two ends of the top end of the first welding protrusion 122 along the second direction X are spaced apart from the second accommodating groove 223. When the first workpiece 100 and the second workpiece 200 are welded, the top end of the first welding protrusion 122 and the bottom wall of the second accommodating groove 223 undergo relative motion along the third direction Y to perform friction welding, and the first lateral mating surface 121 and the second lateral mating surface 221 undergo relative motion along the third direction Y to perform friction welding. The molten material generated during the friction welding between the top end of the first welding protrusion 122 and the bottom wall of the second accommodating groove 223, as well as the molten material generated during the friction welding between the first lateral mating surface 121 and the second lateral mating surface 221, flows into the flow gap 300 between the first welding protrusion 122 and the second accommodating groove 223. This arrangement not only allows the molten material to fill and smooth out minor irregularities on the welding interface between the first workpiece 100 and the second workpiece 200, forming a more secure connection between the first workpiece 100 and the second workpiece 200, but also enhances the sealing and strength of the welded area, ensuring the stability and reliability of the welding effect.

It is to be understood that, in some examples, the middle portion of the top end of the second welding protrusion 222 along the second direction X abuts against the bottom wall of the first accommodating groove 123, while the two ends of the top end of the second welding protrusion 222 along the second direction X are spaced apart from the first accommodating groove 123, forming a flow gap 300 for filling or supplementing the molten material generated during the friction welding of the first workpiece 100 with the second workpiece 200, thereby improving the sealing and strength of the welded area.

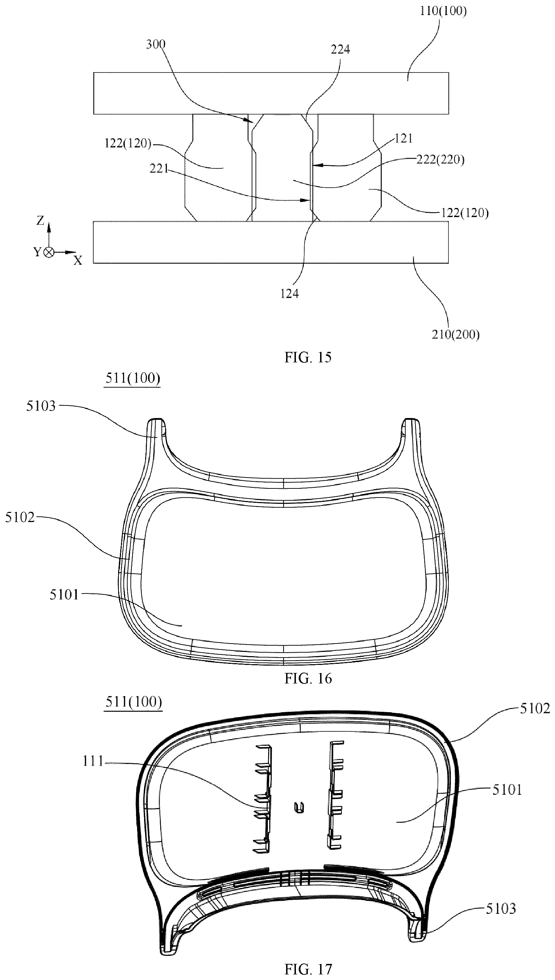

Referring to Figure 15, in some examples, before welding, an interference fit is formed between the first welding protrusion 122 and the second accommodating groove 223, and/or before welding, an interference fit is formed between the second welding protrusion 222 and the first accommodating groove 123. The interference fit between the first welding protrusion 122 and the second accommodating groove 223 ensures a tighter contact during welding, resulting in greater friction and faster heat generation between the first welding protrusion 122 and the second accommodating groove 223. Additionally, since the contact areas between the first welding protrusion 122 and the second accommodating groove 223 will be wore away by the friction, the interference fit between the first welding protrusion 122 and the second accommodating groove 223 before welding ensures stable and continuous contact between the first welding protrusion 122 and the second accommodating groove 223 during the friction welding process, allowing the molten material to fully fill the gaps, thereby improving the efficiency and quality of the friction welding.

It should be noted that "before welding" refers to the state when the first workpiece 100 and the second workpiece 200 are not yet assembled together. Before welding, an interference fit is formed between the first welding protrusion 122 and the second accommodating groove 223. Specifically, along the second direction X, the first welding protrusion 122 has an average dimension greater than that of the second accommodating groove 223, so that an interference fit is achieved upon the first welding protrusion 122 being inserted into the second accommodating groove 223. Before welding, an interference fit is formed between the second welding protrusion 222 and the first accommodating groove 123. Specifically, along the second direction X, the second welding protrusion 222 has an average dimension greater than the average dimension of the first accommodating groove 123, so that an interference fit is achieved upon the second welding protrusion 222 being inserted into the first accommodating groove 123.

Referring to Figures 9 and 15, in some examples, before welding, a flow gap 300 is provided between the first welding protrusion 122 and the wall of the second accommodating groove 223. Specifically, the first welding protrusion 122 has first lateral mating surfaces 121 arranged oppositely along the second direction X, which abut against the second accommodating groove 223 for friction welding. A flow gap 300 is provided between the end of the first welding protrusion 122 away from the first workpiece 100 and the wall of the second accommodating groove 223 facing the first workpiece 100. The flow gap 300 is configured for being filled with the molten material generated during the friction welding of the first welding protrusion 122 with the second welding protrusion 222. The molten material can fill and smooth out minor irregularities on the welding interface between the first workpiece 100 and the second workpiece 200 through the flow gap 300, forming a more secure connection and improving the sealing and strength of the welded area, ensuring the stability and reliability of the welding effect.

It is to be understood that, in some examples, a flow gap 300 is provided between the second welding protrusion 222 and the wall of the first accommodating groove 123. The flow gap 300 is configured to be filled with the molten material generated during the friction welding of the first welding protrusion 122 with the second welding protrusion 222.

Referring to Figure 15, in some examples, the end of the first welding protrusion 122 away from the first workpiece body 110 is provided with a first chamfer 124, and a flow gap 300 is formed between the wall of the second accommodating groove 223 and the first welding protrusion 122 at the first chamfer 124. Specifically, the first chamfer 124 is provided on both sides of the end of the first welding protrusion 122 away from the first workpiece 100 along the second direction X, while the middle portion of the end of the first welding protrusion 122 away from the first workpiece 100 and along the second direction X abuts against the second accommodating groove 223, and the first welding protrusion 122 and the second accommodating groove 223 are interference-fitted. When the first workpiece 100 and the second workpiece 200 are welded, the middle portion of the end of the first welding protrusion 122 away from the first workpiece 100 and the bottom wall of the second accommodating groove 223 facing the first workpiece 100 undergo friction welding, generating molten material. The interference-fitted portion between the first welding protrusion 122 and the second accommodating groove 223 undergoes friction welding, generating molten material. The molten material flows into the flow gap 300, which not only fills and smooths out minor irregularities on the welding interface between the first workpiece 100 and the second workpiece 200, forming a more secure connection between the first workpiece 100 and the second workpiece 200, but also improves the sealing and strength of the welded area, ensuring the stability and reliability of the welding effect.

It is to be understood that, in some examples, the end of the second welding protrusion 222 away from the second workpiece body 210 is provided with a second chamfer 224, and a flow gap 300 is formed between the wall of the first accommodating groove 123 and the second welding protrusion 222 at the second chamfer 224.

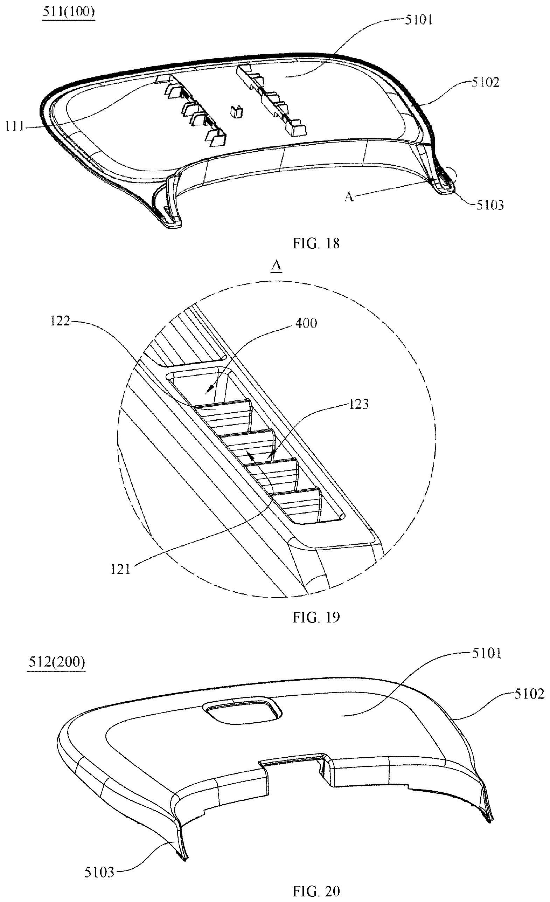

To further enhance the stability of the welding between the first workpiece 100 and the second workpiece 200, referring to Figures 17 and 20, in some examples, the first workpiece body 110 is provided with a first welding rib 111, and the end of the first welding rib 111 away from the first workpiece body 110 abuts against the second workpiece body 210. The first welding rib 111 is melted and connected to the second workpiece 200 through the relative motion between the first workpiece 100 and the second workpiece 200. Referring to Figures 17 and 20, in some examples, the second workpiece body 210 is provided with a second welding rib 211, and the end of the second welding rib 211 away from the second workpiece body 210 abuts against the first workpiece body 110. The second welding rib 211 is melted and connected to the first workpiece 100 through the relative motion between the second workpiece 200 and the first workpiece 100.

By providing the first welding rib 111 or the second welding rib 211 in regions suitable for forward friction welding, the welding effect at these regions is reinforced, ensuring a more secure connection between the first workpiece 100 and the second workpiece 200.

Referring to Figures 15-23, in some examples, the second workpiece body 210 is provided with a plurality of second welding ribs 211 arranged at intervals. The ends of the second welding ribs 211 away from the second workpiece body 210 abut against the first workpiece body 110, and the second welding ribs 211 are melted and connected to the first workpiece body 110 through the relative motion between the second workpiece 200 and the first workpiece 100. Between every two adjacent second welding ribs 211, a second connecting rib 212 is provided, which connects the second welding ribs 211 at both sides. During the friction welding, the second workpiece 200 and the first workpiece 100 may sway or deform along the friction direction due to the relatively thin thickness of the second welding ribs 211. By providing the second connecting rib 212 to connect the second welding ribs 211 at both sides, the stiffness of the second welding ribs 211 connected is enhanced, reducing deformation of the second welding ribs 211 during friction welding and thereby improving the quality of the friction welding. Additionally, and optionally, the second connecting rib 212 may also participate in part of the friction welding process (i.e., the second welding ribs 211 melt first, and after a period of time, the second connecting rib 212 also melts), and timely melted together with the second welding ribs 211 to increase the amount of molten material, making the welding between the second workpiece 200 and the first workpiece 100 more secure. It is to be understood that the first welding ribs 111 may similarly be provided with first connecting ribs, which serve the same purpose as the aforementioned second connecting ribs 212.

It is to be understood that, referring to Figures 15-23, in some examples, the first welding ribs 111 and the second welding ribs 211 may be arranged in any shape to accommodate the friction welding of the first workpiece 100 with the second workpiece 200. For instance, the first welding ribs 111 may be curved, or segmented straight lines. The second welding ribs 211 may be curved, or segmented straight lines.

It is to be understood that, in some examples, the height of the second connecting rib 212 is lower than that of the second welding ribs 211. The second welding ribs 211 are configured for friction welding, while the second connecting rib 212 primarily serves to support the second welding ribs 211. Optionally, the second connecting rib 212 may participate in part of the friction welding process between the first workpiece 100 and the second workpiece 200.

It is to be understood that, in some examples, the height of the second connecting rib 212 may also be flush with that of the second welding ribs 211, allowing the second connecting rib 212 to participate in the entire friction welding process between the first workpiece 100 and the second workpiece 200.

In some examples, the friction welding structure of the present disclosure is used in a children product. Specifically, referring to Figures 15 to 24, the children product is a children's dining table 500, which includes a high chair 520 and a tray 510. The tray 510 includes a tray upper cover and a tray lower cover. The tray upper cover is the first workpiece 100, and the tray lower cover is the second workpiece 200. The tray upper cover and the tray lower cover are provided with corresponding planar portions 5101, outer peripheral portions 5102 located at the outer edges of the planar portions 5101, and joint corner portions 5103. The planar portions 5101 and the outer peripheral portions 5102, due to their regular shapes and large areas, are suitable for conventional forward friction welding, while the joint corner portions 5103, due to their sharp shapes and small areas, are suitable for the lateral friction welding of the present disclosure.

In the joint corner portions 5103 suitable for the lateral friction welding of the present disclosure, the tray upper cover is provided with a plurality of first welding protrusions 122 arranged at intervals, and correspondingly the tray lower cover is provided with a plurality of second welding protrusions 222 arranged at intervals. Before welding, the first welding protrusions 122 and the second welding protrusions 222 are interference-fitted to each other together. A flow gap 300 is provided between a top end of the first welding protrusions 122 facing the tray lower cover and the tray lower cover, and a flow gap 300 is provided between a top end of the second welding protrusions 222 facing the tray upper cover and the tray upper cover. The molten material generated during the welding process of the first welding protrusions 122 and the second welding protrusions 222 flows into the flow gaps 300, thereby filling and smoothing out minor irregularities on the welding interface between the tray upper cover and the tray lower cover, improving the sealing and strength of the welded area.

In the planar portions 5101 and outer peripheral portions 5102 suitable for conventional forward friction welding, the planar portion 5101 of the tray upper cover is provided with first welding ribs 111, and the planar portion 5101 of the tray lower cover is provided with second welding ribs 211. A second connecting rib is provided between every two adjacent second welding ribs 211. The first welding ribs 111 undergo friction welding with the planar portion 5101 of the tray lower cover, and the second welding ribs 211 undergo friction welding with the planar portion 5101 of the tray upper cover. The outer peripheral portion 5102 of the tray upper cover is provided with the first welding ribs 111, which are shorter than the first welding ribs 111 on the planar portion 5101 of the tray upper cover. The outer peripheral portion 5102 of the tray lower cover is provided with second welding ribs 211, which are shorter than the second welding ribs 211 on the planar portion 5101 of the tray lower cover. A second connecting rib is provided between every two adjacent second welding ribs 211. The first welding ribs 111 on the outer peripheral portion 5102 of the tray upper cover undergo friction welding with the outer peripheral portion 5102 of the tray lower cover, and the second welding ribs 211 on the outer peripheral portion 5102 of the tray lower cover undergo friction welding with the outer peripheral portion 5102 of the tray upper cover.

Through the lateral friction welding of the first welding protrusions 122 with the second welding protrusions 222 at the joint corner portions 5103, as well as the forward friction welding of the first welding ribs 111 with the second welding ribs 211 at the planar portions 5101 and outer peripheral portions 5102, the tray upper cover and the tray lower cover are friction-welded together. The welded tray 510 is then installed on the high chair 520 to form the children's dining table 500.

It is to be understood that, in some examples, the children product may be a child safety seat, which includes a seat or a base. The first workpiece 100 and the second workpiece 200 may be the seat upper cover and seat lower cover, or the base upper cover and base lower cover. Additionally, the welding method of the present disclosure is not limited to children roduct and may also be applied to products in other fields, such as vehicle lights, intake pipes, water inlet pipes, etc.

The above are only preferred examples of the present disclosure and are not intended to limit the patent scope of the present disclosure. Any equivalent structural transformations made under the inventive concept of the present disclosure by utilizing the content of the specification and drawings of the present disclosure, or direct/indirect applications in other related technical fields, shall be included within the patent protection scope of the present disclosure.

### LIST OF REFERENCES

- 100: first workpiece
- 110: first workpiece body
- 111: first welding rib;
- 120: first welding structure
- 121: first lateral mating surface
- 122: first welding protrusion
- 123: first accommodating groove
- 124: first chamfer
- 200: second workpiece
- 210: second workpiece body
- 211: second welding rib
- 212: second connecting rib
- 220: second welding structure
- 221: second lateral mating surface
- 222: second welding protrusion
- 223: second accommodating groove
- 224: second chamfer
- 300: flow gap
- 400: recess
- 500: children's dining table
- 510: tray
- 5101: planar portion
- 5102: outer peripheral portion
- 5103: joint corner portion
- 511: upper tray cover
- 512: lower tray cover
- 520: high chair
- 600: forward mating surface
- Z: first direction
- X: second direction
- Y: third direction

## Claims

1. A friction welding structure, comprising:
a first workpiece (100), comprising a first workpiece body (110) and a first welding structure (120) connected to the first workpiece body (110);
a second workpiece (200), comprising a second workpiece body (210) and a second welding structure (220) connected to the second workpiece body (210);
wherein, before welding, the first workpiece (100) and the second workpiece (200) are disposed opposite to each other in a first direction, the first welding structure (120) has a first lateral mating surface (121) extending parallel to or inclined to the first direction, the second welding structure (220) has a second lateral mating surface (221) extending parallel to or inclined to the first direction, and the first lateral mating surface (121) abuts against and is melt-connected to the second lateral mating surface (221) through relative movement between the first workpiece (100) and the second workpiece (200).

2. The friction welding structure according to claim 1, wherein:
the first welding structure (120) comprises a first welding protrusion (122) connected to the first workpiece body (110), and the second welding structure (220) comprises a second welding protrusion (222) connected to the second workpiece body (210); and
the first workpiece (100) and the second workpiece (200) move relative to each other in a third direction during welding, the third direction being perpendicular to the first direction, and the first welding protrusion (122) and the second welding protrusion (222) are disposed opposite to each other in a second direction before welding, the second direction in particular being perpendicular to both the first direction and the third direction.

3. The friction welding structure according to claim 2, wherein:
the first welding structure (120) comprises a plurality of the first welding protrusions (122) arranged at intervals along the second direction, with a first accommodating groove (123) formed between at least two,
in particular every two adjacent first welding protrusions (122), and/or the second welding structure (220) comprises a plurality of the second welding protrusions arranged at intervals along the second direction,
with a second accommodating groove (223) formed between at least two, in particular every two adjacent second welding protrusions; and
before welding, at least one of the second welding protrusions is inserted into the first accommodating groove (123), and/or at least one of the first welding protrusions (122) is inserted into the second accommodating groove (223).

4. The friction welding structure according to claim 3, wherein
before welding, an end of at least one, in particular each of the plurality of the first welding protrusions (122) away from the first workpiece body (110) abuts against a bottom wall of the second accommodating groove (223) away from the first workpiece body (110); and/or,
before welding, an end of at least one, in paticular each of the plurality of the second welding protrusions (222) away from the second workpiece body (210) abuts against a bottom wall of the first accommodating groove (123) away from the second workpiece body.

5. The friction welding structure according to claim 3 or 4, wherein
before welding, a flow gap (300) is provided between at least one, in particular each of the plurality of the first welding protrusions (122) and a wall of the second accommodating groove (223).

6. The friction welding structure according to any of claims 3 to 5, wherein before welding, a flow gap (300) is provided between at least one, in particular each of the plurality of the second welding protrusions (222) and a wall of the first accommodating groove (123).

7. The friction welding structure according to any of claims 4 to 6, wherein before welding, an interference fit is formed between at least one, in particular each of the plurality of the first welding protrusions (122) and the second accommodating groove (223).

8. The friction welding structure according to any of claims 4 to 7, wherein before welding, an interference fit is formed between at least one, in particular each of the plurality of the second welding protrusions (222) and the first accommodating groove (123).

9. The friction welding structure according to any of claims 5 to 8, wherein:
a first chamfer (124) is provided at an end of at least one, in particular each of the plurality of the first welding protrusions (122) away from the first workpiece body (110), and the flow gap (300) is formed between a wall of the second accommodating groove (223) and at least one, in particular each of the plurality of the first welding protrusions (122) at the first chamfer (124).

10. The friction welding structure according to any of claims 6 to 9, wherein a second chamfer (224) is provided at an end of at least one, in particular each of the plurality of the second welding protrusions (222) away from the second workpiece body (210), and the flow gap (300) is formed between a wall of the first accommodating groove (123) and at least one, in particular each of the plurality of the second welding protrusions (222) at the second chamfer (224).

11. The friction welding structure according to any of the preceding claims, wherein the first lateral mating surface (121) has a stepped configuration, and the flow gap (300) is formed between the first lateral mating surface (121) and the second lateral mating surface (221).

12. The friction welding structure according to any of the preceding claims, wherein the second lateral mating surface (221) has a stepped configuration, and the flow gap (300) is formed between the second lateral mating surface (221) and the first lateral mating surface (121).

13. The friction welding structure according to any one of claims 2 to 12, wherein:
the first workpiece body (110) is provided with a recess (400), at least one, in particular each of the plurality of the first welding protrusions (122) is disposed in the recess (400), and at least one, in particular each of the plurality of the second welding protrusions (222) extends into the recess (400) and abuts against at least one, in particular each of the plurality of the first welding protrusions (122); and/or,
the second workpiece body (210) is provided with a recess (400), at least one, in particular each of the plurality of the second welding protrusions (222) is disposed in the recess (400), and at least one, in particular each of the plurality of the first welding protrusions (122) extends into the recess (400) and abuts against at least one, in particular each of the plurality of the second welding protrusions.

14. The friction welding structure according to any one of claims 1 to 13, wherein:
The first workpiece (100) is a tray upper cover and the second workpiece (200) is a tray lower cover of a tray (510) for a children's dining table (500); and/or
the first workpiece body (110) is provided with a first welding rib (111), an end of the first welding rib (111) away from the first workpiece body (110) abuts against the second workpiece body (210), and the first welding rib (111) is melt-connected to the second workpiece body (210) through relative movement between the first workpiece (100) and the second workpiece (200); and/or,
the second workpiece body (210) is provided with a second welding rib (211), an end of the second welding rib (211) away from the second workpiece body (210) abuts against the first workpiece body (110),
and the second welding rib (211) is melt-connected to the first workpiece body (110) through relative movement between the first workpiece (100) and the second workpiece (200).

15. The friction welding structure according to any one of claims 1 to 14, wherein:
the first workpiece body (110) is provided with a plurality of first welding ribs (111) arranged at intervals, ends of the first welding ribs (111) away from the first workpiece body (110) abut against the second workpiece body (210), the first welding ribs (111) are melt-connected to the second workpiece body (210) through relative movement between the first workpiece (100) and the second workpiece (200), a first connecting rib is further provided between at least two, in particular every two adjacent first welding ribs (111), and the first connecting rib is connected to the first welding ribs (111) on both sides; and/or,
the second workpiece body (210) is provided with a plurality of second welding ribs (211) arranged at intervals, ends of the second welding ribs (211) away from the second workpiece body (210) abut against the first workpiece body (110), the second welding ribs (211) are melt-connected to the first workpiece body (110) through relative movement between the first workpiece (100) and the second workpiece (200), a second connecting rib (212) is further provided between at least two, in particular every two adjacent second welding ribs (211), and the second connecting rib (212) is connected to the second welding ribs (211) on both sides.
